# EUROPEAN PATENT APPLICATION

(11) **EP 4 563 960 A1**
(43) Date of publication of application: **04.06.2025**
(21) Application number: 24214059.8
(22) Date of filing: 20.11.2024
(51) Int. Cl.: G01L 5/00

(54) **MEASURING DEVICE AND METHOD FOR MEASURING A SPRING FORCE**

(30) Priority: 30.11.2023 IT 202300025596
(71) Applicant: Tetra Laval Holdings & Finance S.A., 1009 Pully (CH)
(72) Inventor: FERRARI, Damiano, 41123 Modena (IT); SERENI, Alessandro, 41123 Modena (IT); ALGERI, Pierpaolo, 41123 Modena (IT)
(74) Representative: Tetra Pak - Patent Attorneys SE

(57) **Abstract**

There is described a measuring device (26) for measuring the setting spring force of a spring (24) in a pressing assembly (21) of a tube forming and sealing device (9) with a force gauge (27), in particular a dynamometer (27), for measuring the spring force and provided with a pin (29) configured, in use, to contact the spring (24); an adapter element (28) comprising a loading device (38) configured to control a movement of the pin (29) and gradually increase, in use, the force applied by the pin (29) to the spring (24), and a clamping element (30), preferably with a substantially C shape, couplable in use to a support structure arranged in a fixed position with respect to the spring (24).

## Description

### TECHNICAL FIELD

The present invention relates to a measuring device for measuring a spring force of a spring in a pressing assembly of a tube forming and sealing device, to a system for setting the spring in a pressing assembly of a tube forming and sealing device, to a method for measuring the spring force of the spring in a pressing assembly of a tube forming and sealing device and to a method for setting the spring in a pressing assembly of a tube forming and sealing device.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package has a longitudinal sealing band, a top transversal sealing band and a bottom transversal sealing band.

A typical packaging machine comprises a conveying device for advancing the web of packaging material, the sterilization apparatus for sterilizing the web of packaging material prior to its formation into the tube, a tube forming and sealing device configured to form the tube from the advancing web of packaging material and to longitudinally seal the tube, a filling device for filling the tube with the pourable product and the package forming apparatus adapted to form, transversally seal and cut individual packages from the tube of packaging material.

More in detail, the filling device comprises a filling pipe for continuously feeding, in use, the pourable product into the tube and a pressing assembly to exert a mechanical force on the tube during the sealing phase, in particular on the longitudinal seam portion. The pressing assembly comprises at least a pressure roller and at least a counter-pressure roller to exert the mechanical force onto the longitudinal seam portion from opposite sides thereof, wherein the counter-pressure roller is normally supported by the lower forming ring and the pressure roller is supported by the filling pipe. Normally, the pressure roller is arranged within the tube and connected to the filling pipe through a spring, preferably a leaf spring, exerting in use a spring force onto the longitudinal seam portion.

One of the most important settings of the packaging machine is the spring force applied onto the longitudinal seam portion because it could affect the longitudinal sealing quality. Normally, the spring is installed and set manually by an operator through a dynamometer once the web of packaging material has been removed from the area of the pressing assembly. Accordingly, the procedure is highly dependent on the operator's experience and can be prone to human error. Even though the known procedure for measuring the force of, installing and setting the spring works satisfactorily well, a desire is felt in the sector to further improve and simplify the procedure.

### DISCLOSURE OF INVENTION

It is therefore an object of the present invention to provide a measuring device for measuring a spring force of a spring in a pressing assembly of a tube forming and sealing device addressing the drawbacks of the state of the art and being easy and economical to be manufactured.

An object of the present invention is to provide a system for setting a spring in a pressing assembly of a tube forming and sealing device addressing the drawbacks of the state of the art and being easy and economical to be manufactured.

An object of the present invention is to provide a method for measuring the spring force of a spring in a pressing assembly of a tube forming and sealing device addressing the drawbacks of the state of the art and being easy and economical to be implemented.

An object of the present invention is to provide a method for setting the spring in a pressing assembly of a tube forming and sealing device addressing the drawbacks of the state of the art and being easy and economical to be implemented.

According to the invention there are provided a measuring device for measuring a spring force of a spring in a pressing assembly of a tube forming and sealing device, a system for setting the spring in a pressing assembly of a tube forming and sealing device, a method for measuring the spring force of the spring in a pressing assembly of a tube forming and sealing device and a method for setting the spring in a pressing assembly of a tube forming and sealing device according to the appended claims.

### BRIEF DESCRIPTION OF THE DRAWINGS

A non-limiting embodiment of the present invention will be described by way of example with reference to the accompanying drawings, in which:
- figure 1 is a schematic view of a packaging machine having a package forming apparatus with parts removed for clarity;
- figure 2 is a plan view of a particular of the packaging machine of figure 1 with parts removed for clarity;
- figure 3 is a perspective view of case enclosing a system for setting the spring in a pressing assembly of a tube forming and sealing device realized according to the present invention;
- figure 4 is a perspective view of a measuring device realized according to the present invention;
- figure 5 is a perspective view of a sample of the system of figure 3;

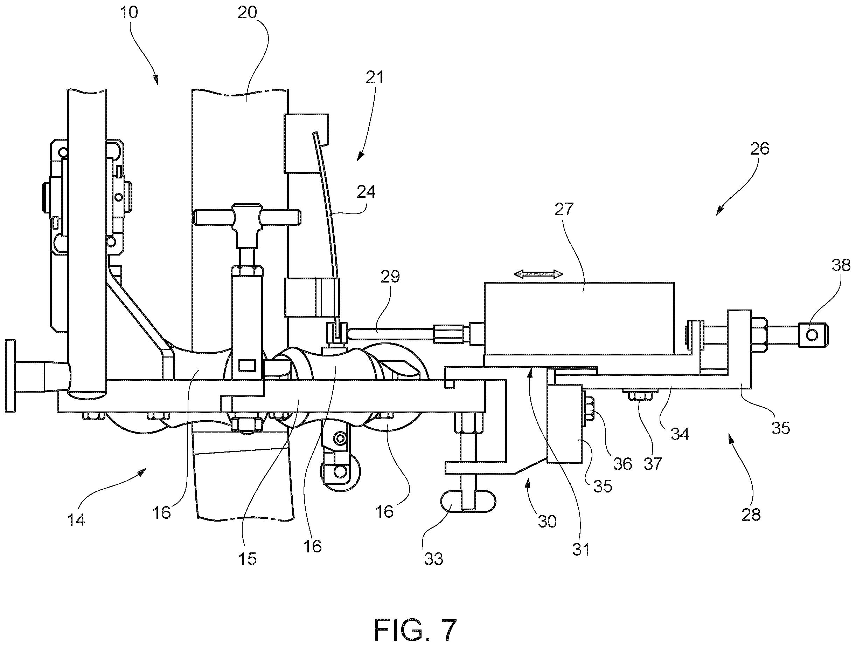

- figure 6 and 7 are lateral views of the measuring device of figure 4 and of the sample of figure 5 when in use onto the particular of figure 2.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc. In more detail, packaging machine 1 may be configured to produce packages 2 from a multilayer packaging material. Preferentially, a multilayer packaging material having heat seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product. Moreover, the multilayer packaging material may also comprise a layer of gas- and light-barrier material, e.g. aluminum foil or ethylene vinyl alcohol (EVOH) film, preferentially being arranged between one of the layers of the heat-seal plastic material and the layer of fibrous material. Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Furthermore, packaging machine 1 is configured to produce packages 2 by forming a tube 4 from the web 3, longitudinally sealing the tube 4, filling the tube 4 with the pourable product and to transversally seal, and preferentially transversally cut the tube 4.

According to some possible non-limiting embodiments, each package 2 extends along a longitudinal axis A and comprises at least a first transversal sealing band 5, and preferentially also a second transversal sealing band arranged at opposite ends of the package 2.

Moreover, each package 2 also comprises a longitudinal seam portion 6. Preferentially, each first transversal sealing band 5 and/or each second transversal sealing band are transversal (preferentially perpendicular) to the respective longitudinal seam portion 6.

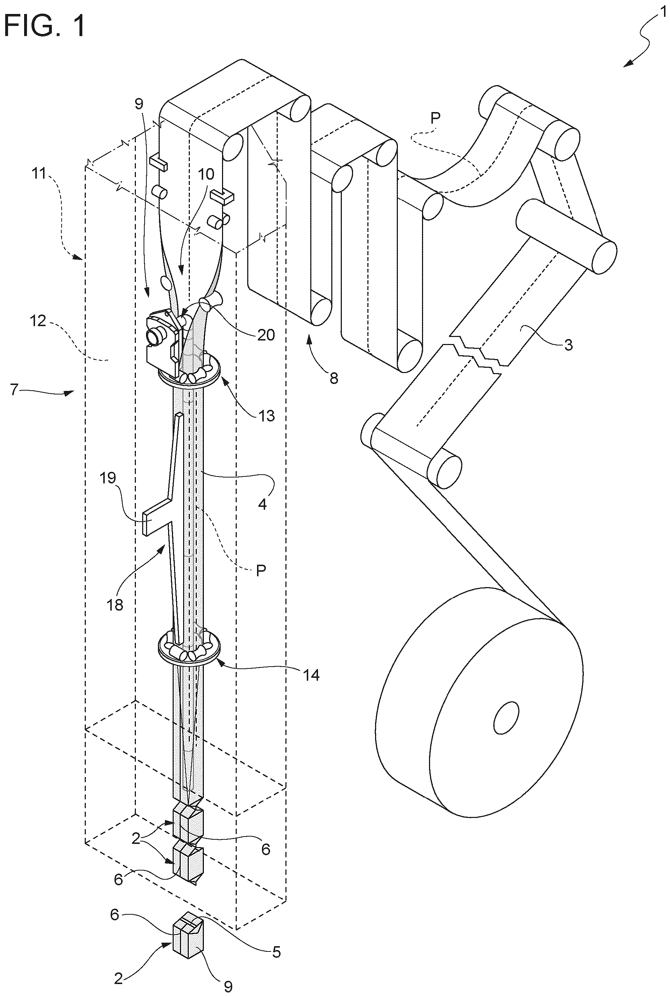

With particular reference to figure 1, packaging machine 1 comprises a package forming apparatus 7 configured to at least partially form the tube 4, preferentially to also transversally seal and/or to transversally cut the tube 4, for obtaining the packages 2.

Moreover, packaging machine 1 comprises:
- a conveying device 8 configured to advance along a conveying path P the web 3 and the tube 4;
- a tube forming and sealing device 9 configured to form the tube 4 from the advancing web 3 and to longitudinally seal the tube 4; and
- a filling device 10 for filling the tube 4 with the pourable product.

In further detail, the packaging machine 1 comprises an isolation chamber 11, preferentially delimiting an inner environment 12 from an outer environment. Preferentially, the inner environment 12 is a sterile (aseptic) environment, preferably containing a controlled atmosphere. Preferentially, the tube forming and sealing device 9 is at least partially arranged within the isolation chamber 11, in particular within the inner environment 12, and is configured to fold and longitudinally seal the tube 4 within the isolation chamber 11, in particular within the inner environment 12.

Moreover, the packaging machine 1 comprises a sterilization unit configured to sterilize the advancing web 3, preferentially the sterilization unit is arranged upstream of the tube forming and sealing device 9 along the conveying path P.

The tube forming and sealing device 9 comprises at least two forming assemblies 13, 14 preferentially arranged within the isolation chamber 11, even more preferentially arranged within the inner environment 12, configured to gradually fold in cooperation with one another the web 3 into the tube 4, preferentially by overlapping opposite longitudinal edges of the web 3 with one another. Thereby, in use, the seam portion 6 is formed. The forming assemblies 13, 14 are spaced apart from, and parallel to, one another. Furthermore, the forming assemblies 13, 14 are arranged coaxial to one another. In particular, the tube forming and sealing device 9 comprises the forming assembly 13 and the forming assembly 14 placed along the conveying path P in succession (one after the other) carried by a fixed structure and interacting with the web 3 of packaging material.

More in detail, the forming assemblies 13, 14 are configured to fold the web 3 of packaging material gradually into the tube 4 (cylinder) and to superimpose a (first) lateral portion 3A of the web 3 of packaging material to a (second) lateral portion 3B of the web 3 of packaging material, opposite the (first) lateral portion 3A, to form the continuous tube 4. The forming assembly 14 is placed downstream of the forming assembly 13 along the conveying path P.

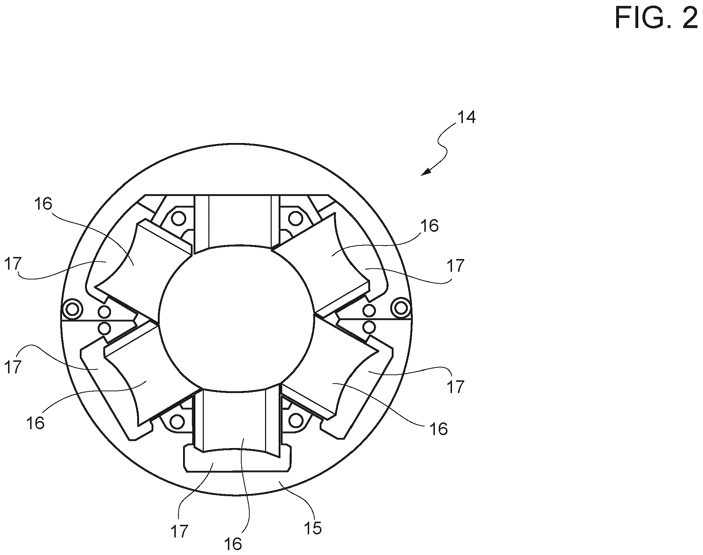

The forming assembly 14 will now be described in detail with particular reference to figure 2. The forming assembly 14 comprises a fixed forming ring 15 surrounding the web 3 of packaging material and supporting a number (for example, six) of rollers 16 cooperating to fold the web 3 of packaging material. The rollers 16 have respective lateral surfaces with substantial concave shape (i.e. the web 3 of packaging material encounters a diameter at the ends greater than a diameter at the center of the first rollers 16). The lateral surfaces of the rollers 16 define a compulsory passage for the web 3 of packaging material being folded. Between the forming ring 15 and the lateral surfaces of each rollers 16 are defined respective gaps 7.

Additionally, the tube forming and sealing device 9 comprises a sealing device 18 having a sealing head 19, preferentially arranged within the isolation chamber 11, even more preferentially within the inner environment 11, and, configured to longitudinally seal the tube 4, preferentially along the longitudinal seam portion 6. Advantageously, the forming assembly 14 is placed downstream of the sealing head 19 along the conveying path P. In other words, in use, the longitudinal seam portion 6 is sealed by activation of the sealing head 18. Preferentially but not necessarily, the sealing head 19 is at least partially positioned within isolation chamber 11.

More specifically, the sealing head 19 is configured to transfer thermal energy to the tube 4, in particular to the longitudinal seam portion 6 for longitudinally sealing the tube 4. The sealing head 19 can be of the kind operating by means of induction heating and/or by a stream of a heated gas and/or by means of ultrasound and/or by laser heating and/or by any other means.

Preferentially, the filling device 10 comprises a filling pipe 20 configured to direct the pourable product into the tube 4. Preferentially, the filling pipe 20 is at least partially placed within the tube 4 for continuously feeding, in use, the pourable product into the tube 4. The filling pipe 20 is in fluid connection with a pourable product storage tank (not shown), which is adapted to store for the pourable product to be packaged. In particular, the filling pipe 20 is configured to direct, in use, the pourable product into the tube 4.

Finally, the tube forming and sealing device 9 comprises a pressing assembly 21 configured to exert a mechanical force on the tube 4 during the sealing phase. In particular, the pressing 21 assembly is configured to exert a mechanical force on the longitudinal seam portion 6 to ensure the longitudinal sealing of the tube 4. The pressing assembly 21 comprises at least a pressure roller 22 and at least a counter-pressure roller 23 adapted to exert the mechanical force onto the longitudinal seam portion 6 from opposite sides thereof. In particular, in use, the longitudinal seam portion 6 is interposed between the pressure roller 22 and the counter-pressure roller 23. Advantageously, the counter-pressure roller 23 is supported by the forming ring 14.

Advantageously, the pressure roller 22 is supported by the filling pipe 20.

The pressure roller 22 is arranged within the tube 4. More in detail, the pressure roller 22 is supported by a spring 24 which is connected to the filling pipe 20. In particular, the spring 24 may comprise an elastic body, e.g. a bent (metal) plate as depicted in the figures. The elastic body may be configured to recover its original shape when released after being distorted.

The spring 24 has a first end connected to the pressure roller 22. In particular, the spring 24 has a second end (opposite to the first end) connected to the filling pipe 20. Preferably, the spring 24 is a (single) leaf spring 24.

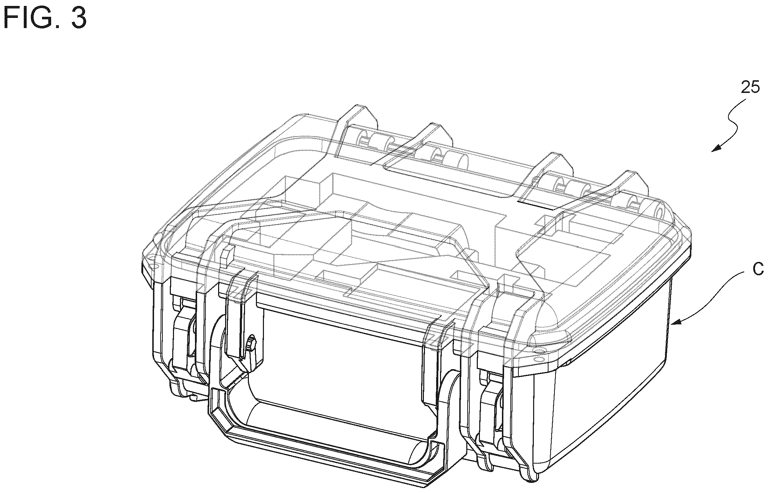

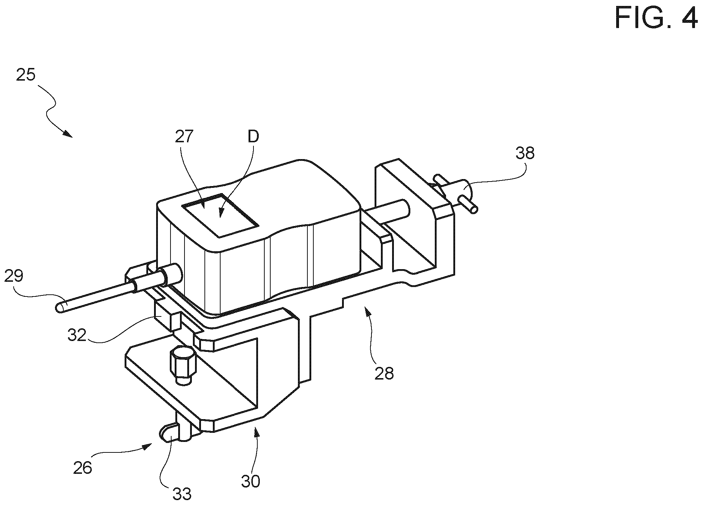

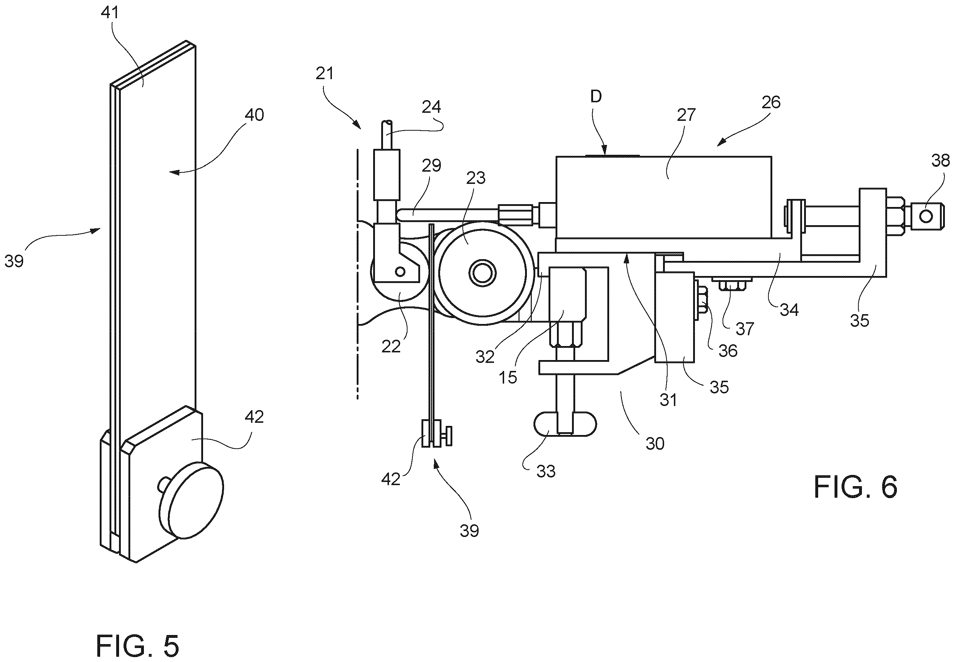

Figures 3, 4 and 5 show a system 25 for setting the spring 24. In other words, the system 25 is configured to set the spring force applied by the spring 24 onto the longitudinal seam portion 6 to a predetermined value. Advantageously, the system 25 is enclosed in a case C. The system 25 is configured for setting the spring 24 during a stop phase of the packaging machine 1 once the web 3 of packaging material has been removed from the area of the pressing assembly 21.

The system 25 comprises a measuring device 26 configured for measuring the spring force of the spring 24. The measuring device 26 comprises a force gauge 27, in particular a dynamometer 27, and an adapter element 28 which is realized to support the dynamometer 27. Preferably, the dynamometer 27 is of the digital type.

The (e.g. digital or analog) dynamometer 27 comprises a display D for visualizing the measured spring force. The dynamometer 27 is connected to a pin 29 protruding, in use, towards the spring 24. The pin 29 is configured, in use, to contact the spring 24, e.g. the elastic body thereof.

The adapter element 28 is connected to a clamping element 30. The clamping element 30 is configured to be connected preferably to the forming ring 14 or any other support structure arranged in a fixed position with respect to the spring 24. In other words, the clamping element 30 is realized to be connected in a fixed manner (non-movable and non-releasable manner) to the forming ring 15 or to the support structure.

The clamping element 30 has a substantially C shape with an upper portion having an upper flat surface 31 facing the dynamometer 27 and a lower substantially flat surface which in, use, is arranged in contact with an upper surface of the forming ring 15. The clamping element 30 further comprises an appendage 32 protruding from said lower surface and configured to engage the gap 17. Finally, the clamping element 30 is provided with fixing means 33 (for example a screw) for tightening the clamping element 30 onto the forming ring 15.

The adapter element 28 further comprises a support 34 bracket for the dynamometer 27. The support bracket 34 has a substantially L shape with an upper flat surface for supporting the dynamometer 27 and a lower surface which, in use, slides on the upper surface 31.

Finally, the adapter element 28 comprises a connection bracket 35 having a first part configured to be connected to a central part of the clamping element 30. Said first part is provided with a through slit for adjusting (and regulating) the height of the connection bracket 35 with respect to the clamping element 30 by means of fixing means 36. In other words, the position of the connection bracket 35 is adjustable with respect to the clamping element 30.

The connection bracket 35 further comprises a (second) part configured to be connected to the support bracket 34. The second part has an upper surface upon which, in use, slides the support bracket 34. Said second part is provided with a through slit having an oblong shape for enabling connection means 37 to slide within it. Connection means 37 are defined by a nut and a pin fixed to the support bracket 34 and protruding downwards from the support bracket 34.

Finally, the connection bracket 35 comprises a (third) part configured to be connected to the support bracket 34 by means of a loading device 38. Advantageously, the loading device 38 comprises an endless screw 38. The endless screw 38 is maneuvered (controlled) by an operator.

In particular, the loading screw 38 is configured to control the movement of the pin 29 and gradually increase, in use, the force applied by the pin 29 onto the spring 24. The position of the support bracket 34 (and, consequently, of the dynamometer 27) with respect to the connection bracket 35 is controlled by operating the endless screw 38. The endless screw 38 is configured to control, in use, the movement of the support bracket 34 (and, consequently, of the dynamometer 27) along a direction Y from a retracted position in which the pin 29 does not contact the spring 24 to an intermediate position in which the pin 29 contacts the spring 24 and to a final position in which it is possible to check a predetermined spring force displayed by the dynamometer 27.

The system 25 further comprises a load 42 shown in figure. The load 42 is couplable to a sample (portion) 40 of packaging material to define a sample 39 (i.e. the sample 39 is defined by the load 42 when connected to the sample 40 of packaging material) . The load 42 ranges from 20 gr to 100 gr; preferably, the load 42 ranges from 40 gr to 75 gr and even more preferably the load 42 is 50 gr.

The load 42 is configured to be positioned in the area of the spring 24. Advantageously, the load 42 is configured to be positioned at the spring 24, e.g. at the end thereof connected to the roller 22. The load 42 is configured to exert, in use, a gravitational force indicative of the setting of the spring 24.

Advantageously, the operator thanks to the load 42 can be able to objectively assess the correct setting of the spring 24.

The sample 40 of packaging material comprises a first semi-portion of material that overlaps a second portion of material defining an overlapping region 41. Preferably, the load 42 can be coupled to the sample 40 of packaging material in a releasable manner in order to substitute the attached sample 40 of packaging material.

Preferably, the overlapping region 41 has a thickness that is substantially equal to 1 mm. More in detail, the sample 40 of packaging material is configured to reproduce the longitudinal seam portion 6 of the tube 4. The sample 40 of packaging material is realized to be interposed, in use, between the pressure roller 22 and the counter-pressure roller 23. Advantageously, the sample 40 of packaging material may not be part of the system 25. Different samples 40 of packaging material can be connected to the load 42.

More in detail, as already said, the endless screw 38 is configured to control, in use, the movement of the support bracket 34 (and, consequently, of the dynamometer 27) along the direction Y to the final position which corresponds a predetermined spring force displayed in the display D.

The method to measure the spring force of the spring 24 by means of the system 25 comprises the following:
- optionally, a preliminary phase of regulating the position (i.e., the height) of the connection bracket 35 with respect to the clamping element 30 through the fixing means 36;
- connecting the adapter element 28 to the forming assembly 14; in detail, the clamping element 30 is connected to the forming ring 15 by inserting the appendage 32 into the gap 17 and by tightening the fixing means 33;
- measuring the spring force, e.g. by means of the display D of the dynamometer 27;
- adjusting the position of the pin 29as a function of the measured spring force; and
- reaching a predetermined force.

The method may comprise one or more of:
- a phase in which the dynamometer 27 is turned on and settled to zero Newton;
- a phase in which the operator starts to slightly move the endless screw 38 thereby causing the movement of the dynamometer 27 from the retracted position in which the pin 29 does not contact the spring 24 to an intermediate position in which the pin 29 contacts the spring 24; when the pin 29 contacts the spring 24, the measured spring force begin to rise and is readable in the display D.

By slightly moving the endless screw 38, the measured spring force visible in the display D continuously increases and the pin 29 begins to slightly move the pressure roller 22 away from the counter-pressure roller 23.

The method for setting the spring 24 by means of the system 25 may further comprise one or more of the following:
- coupling the portion 40 of packaging material to the load 42 and, subsequently, arranging the portion 40 of packaging material between the pressure roller 22 and the counter-pressure roller 23 with the load 42 positioned closer to the ground with respect to the portion 40 of packaging material; and
- checking the force shown by the dynamometer 27 when the sample 40 of packaging material starts moving due to the gravitational force of the load 42.

In other words, the last step may be written as checking whether the sample 39 falls when the predetermined force is readable in the display D.

In other words, when the predetermined force is readable in the display D the sample 39 should start to move/fall.

Finally, if the sample 39 falls before the dynamometer 27 displays the predetermined force or if the sample 39 does not fall when the dynamometer 27 displays the predetermined force a bend of the spring 24 has to be adjusted.

The system 25 described above has multiple advantages; in particular, it has been demonstrated that the measured spring force is more precise and accurate, and the procedure is more repeatable and less operator dependent. Moreover, the adapter element 28 can be easily installed on many different forming assemblies 14.

### LIST OF REFERENCE NUMERALS

- 1: packaging machine
- 2: packages
- 3: web of packaging material
- 4: tube
- 5: sealing band
- 6: longitudinal seam portion
- 7: package forming apparatus
- 8: conveying device
- 9: tube forming and sealing device
- 10: filling device
- 11: isolation chamber
- 12: inner environment
- 13: forming assembly
- 14: forming assembly
- 15: forming ring
- 16: roller
- 17: gap
- 18: sealing device
- 19: sealing head
- 20: filling pipe
- 21: pressing assembly
- 22: pressure roller
- 23: counter pressure roller
- 24: spring
- 25: system
- 26: measuring device
- 27: dynamometer
- 28: adapter element
- 29: pin
- 30: clamping element
- 31: upper surface
- 32: appendage
- 33: fixing means
- 34: support bracket
- 35: connection bracket
- 36: fixing means
- 37: connection means
- 38: loading element/screw
- 39: sample
- 40: sample of packaging material
- 41: overlapping region
- 42: load
- P: conveying path
- D: display
- C: case
- Y: direction

## Claims

1. A measuring device (26) for measuring a spring force of a spring (24) in a pressing assembly (21) of a tube forming and sealing device (9), the measuring device (26) comprising:
- a force gauge (27), in particular a dynamometer (27), for measuring the spring force and provided with a pin (29) configured, in use, to contact the spring (24);
- an adapter element (28) comprising a loading device (38) configured to control a movement of the pin (29) and gradually increase, in use, the force applied by the pin (29) to the spring (24), and
- a clamping element (30), preferably with a substantially C shape, couplable in use to a support structure arranged in a fixed position with respect to the spring (24).

2. A measuring device (26) according to claim 1, wherein the support structure comprises a fixed forming ring (15) supporting a number of rollers (16) configured to cooperate to fold a web (3) of packaging material and wherein between the forming ring (15) and the lateral surfaces of each roller (16) are defined respective gaps (17); the clamping element (30) comprises an appendage (32) configured to engage, in use, one of said gap (17).

3. - A measuring device (26) according to claim 1 or 2, wherein the adapter element (28) comprises a connection bracket (35) having a first part configured to be connected to the clamping element (30), wherein the position of said connection bracket (35) is adjustable with respect to the clamping element (30).

4. - A measuring device (26) according to claim 3, wherein the connection bracket (35) is provided with a through slit for adjusting its height with respect to the clamping element (30) by means of fixing means (36).

5. - A measuring device (26) according to any previous claim, wherein the clamping element (30) comprises an upper surface (31) and wherein the adapter element (28) comprises a support bracket (34) for supporting the force gauge (27), the adapter element (28) having a lower surface which, in use, slides on the upper surface (31) along a direction (Y).

6. - A measuring device (26) according to any claim 5, wherein the adapter element (28) comprises a connection bracket (35) provided with a through slit having an oblong shape for enabling connection means (37) to slide within it; connection means (37) are at least partly fixed to the support bracket (34).

7. A measuring device (26) according to any previous claim, wherein the loading device (38) comprises an endless screw (38) and wherein the movement of the pin (29) is obtained by turning said endless screw (38).

8. A system for setting a spring (24) in a pressing assembly (21) of a tube forming and sealing device (9) comprising:
- a measuring device (26) according to anyone of the previous claims; and
- a load (42) configured to be positioned at the spring (24) and to exert a gravitational force indicative of the setting of the spring (24).

9. A system according to claim 8, wherein the load (42) is couplable to a sample (40) of packaging material wherein a first semi-portion of material overlaps a second portion of material defining an overlapping region (41) to reproduce a longitudinal seam portion (6) of a tube (4) of packaging material.

10. A system according to claim 8 or 9, wherein the load (42) is couplable to a sample (40) of packaging material having a thickness of substantially 1 mm.

11. A system according to claim 9 or 10, wherein the support structure comprises a fixed forming ring (15) surrounding a web (3) of packaging material and the pressing assembly (21) comprises a pressure roller (22) positioned at an end of the spring (24) and a counter pressure roller (23) arranged on the forming ring (15); the sample (40) of packaging material being configured to be interposed, in use, between the pressure roller (22) and the counter pressure roller (23).

12. A system according to claim 11, wherein the load (42) is configured to cause a disengagement of the sample (40) of packaging material from the pressure roller (22) and the counter pressure roller (23).

13. - A method for measuring a spring force of a spring (24) in a pressing assembly (21) of a tube forming and sealing device (9) comprising a forming assembly (14) to gradually fold a web (3) of packaging material into a tube (4) and arranged in a fixed position with respect to the spring (24); the method comprises the steps of:
- providing a measuring device (26) according to any of claims 1 to 7;
- connecting the clamping element (30), preferably with a substantially C shape, to the support structure;
- measuring the spring force;
- adjusting a position of the pin (29) as a function of the measured spring force;
- reaching a predetermined force.

14. A method according to claim 13, comprising adjusting the pin (29) position by screwing an endless screw (38).

15. A method for setting a spring (24) in a pressing assembly (21) of a tube forming and sealing device (9) comprising the method steps according to claim 13 or claim 14 and the further steps of:
- coupling a sample (40) of packaging material to a load (42);
- positioning the sample (40) of packaging material between a pressure roller (22) of the pressing assembly (21) connected to an end of the spring (24) and a counter pressure roller (23) of the pressing assembly (21) connected to the forming assembly (14); wherein the load (42) is positioned closer to the ground with respect to the sample (40) of packaging material;
- checking the force shown by the dynamometer (27) when the sample (40) of packaging material starts moving due to the gravitational force of the load (42).

16. A method according to claim 15 and comprising the further step of adjusting a bend of the spring (24) if the sample (40) of packaging material starts moving before the force gauge (27) displays the predetermined force or if the sample (40) of packaging material does not move when the force gauge (27) displays the predetermined force.
